(19) Europäisches Patentamt / European Patent Office / Office européen des brevets

(11) **EP 2 580 960 B1**

(12) **EUROPEAN PATENT SPECIFICATION**

(45) Date of publication and mention
of the grant of the patent:
**15.08.2018 Bulletin 2018/33**

(21) Application number: **12186452.4**

(22) Date of filing: **27.09.2012**

(51) Int Cl.:
*A01N 25/28* (2006.01)     *A01N 25/04* (2006.01)
*A01N 25/02* (2006.01)     *A01N 25/18* (2006.01)
*A01N 35/02* (2006.01)     *A01N 37/02* (2006.01)
*A01P 17/00* (2006.01)     *A01P 19/00* (2006.01)

(54) **WATER DISPERSION TYPE SEX PHEROMONE SUSTAINED RELEASE PREPARATION**

WASSERDISPERGIERTE ZUBEREITUNG ZUR FREISETZUNG VON SEXPHEROMONEN

PRÉPARATION CONTENANT DES PHÉROMONES SEXUELLES À LIBÉRATION PROLONGÉE DE TYPE DISPERSION D'EAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.10.2011 JP 2011224788**

(43) Date of publication of application:
**17.04.2013 Bulletin 2013/16**

(73) Proprietor: **Shin-Etsu Chemical Co., Ltd.
Tokyo 100-0004 (JP)**

(72) Inventors:
• **Yamashita, Miyoshi**
**Joetsu-Shi, Niigata 942-8601 (JP)**
• **Mochizuki, Fumiaki**
**Kubiki-ku, Niigata 942-8601 (JP)**
• **Fukumoto, Takehiko**
**Kubiki-ku, Niigata 942-8601 (JP)**

(74) Representative: **Vidon Brevets & Stratégie
16B, rue de Jouanet
BP 90333
35703 Rennes Cedex 7 (FR)**

(56) References cited:
WO-A1-93/25076     CN-A- 102 178 640
US-A- 4 456 587     US-A1- 2004 127 463

• PATEL A R ET AL: "Effect of Hydrophilic Polymer on Solubilization of Fenofibrate by Cyclodextrin Complexation", JOURNAL OF INCLUSION PHENOMENA AND MACROCYCLIC CHEMISTRY, KLUWER ACADEMIC PUBLISHERS, DO, vol. 56, no. 1-2, 28 March 2006 (2006-03-28), pages 247-251, XP019435381, ISSN: 1573-1111, DOI: 10.1007/S10847-006-9091-4
• "Pluronic 10R5 Block Copolymer Surfactant", Technical Bulletin, BASF, Performance Chemical, 1 January 2004 (2004-01-01), XP55049495, Retrieved from the Internet: URL:http://worldaccount.basf.com/wa/NAFTA/ Catalog/ChemicalsNAFTA/doc4/BASF/PRD/3008 5 036/.pdf?title=&asset_type=pi/pdf&language =EN&urn=urn:documentum:eCommerce_sol_E U:09 007bb28001f5f3.pdf [retrieved on 2013-01-14]
• V. G. YATSYNIN ET AL: "Identification of female-produced sex pheromones and their geographical differences in pheromone gland extract composition from click beetles (Col., Elateridae)", JOURNAL OF APPLIED ENTOMOLOGY, vol. 120, no. 1-5, 12 January 1996 (1996-01-12), pages 463-466, XP55049496, ISSN: 0931-2048, DOI: 10.1111/j.1439-0418.1996.tb01636.x

EP 2 580 960 B1

**Description**

BACKGROUND OF THE INVENTION

1. Field of the Invention

The present invention relates to a water dispersion type sex pheromone sustained release preparation, more specifically, a water dispersion type sex pheromone sustained release preparation which can be sprayed by using a common sprayer and releases a sex pheromone substance for a predetermined period after being sprayed.

2. Description of the Related Art

In recent years, methods of using pheromones of harmful insects have been attracting attentions for controlling harmful insects in agriculture and forestry. Among these, the method which is the most effective and the most popular in the market is a mating disruption method of using a sex pheromone substance. A sex pheromone is secreted by an insect and used for the communication and detection between male and female at the time of mating. The mating disruption method comprises a step of diffusing a slight amount of this sex pheromone substance in an agricultural field or a forest to disrupt and interrupt the communication and detection between male and female so that the number of mating decreases, and the breeding and population of harmful insects are controlled.

In this mating disruption method, it is necessary to place a sex pheromone sustained release preparation for releasing a sex pheromone substance in an agricultural field or a forest. At present, regarding commonly used sex pheromone sustained release preparations, it is necessary for workers to place several hundreds to a thousand of the preparations per hectar on crops or structures such as piles and support pillars, and thus it is substantially difficult to place the preparations in large-area agricultural fields or vast forests. Therefore, there is a demand for a sex pheromone sustained release preparation which can be sprayed by using an airplane, a helicopter, a tractor, a speed sprayer or the like.

As spray-type sex pheromone sustained release preparations which have been developed until now, a sustained release preparation using a synthetic resin emulsion obtained by emulsification polymerization of an unsaturated carboxylic acid ester and a polymerizable monomer (JP 60-252403A), a sustained release preparation obtained by mixing a powder of an ethylene-vinyl acetate copolymer impregnated with a sex pheromone substance, with an oil-in-water type (O/W type) acrylic-based emulsion (JP 7-231743A), a sustained release preparation of an emulsion obtained by emulsification polymerization of a monofunctional (meth)acrylic ester and a multifunctional (meth)acrylic ester in the presence of a sex pheromone substance (JP 2001-158843A, JP 2004-331625A and JP 2006-35210A) and the like have been reported.

However, there are significant problems that spray-type preparations cannot be recovered after use, and that the above-mentioned conventional spray-type preparations remain without being decomposed by microorganisms and the like in environments and put a load on the natural world since they comprise a synthetic polymer as a base material for sustained release.

On the other hand, a cyclodextrin, which is a cyclic oligosaccharide synthesized from starch by an enzymatic reaction, is known to enclose an organic compound in a cyclodextrin ring which is hydrophobic in water. Examples of natural-type cyclodextrin which is industrially produced include $\alpha$-cyclodextrin, $\beta$-cyclodextrin and $\gamma$-cyclodextrin in which six, seven and eight glucose rings are bound in a cyclic form, respectively. It is known that these natural-type cyclodextrins are non-toxic and biodegradable.

Until now, a sustained release preparation has been reported in which a cyclodextrin powder which encloses an insect sex pheromone substance is sealed in a plastic bottle or plastic bag as it is (U.S. Patent No. 5,650,160 and Crop protection 28 (2009) 181-189).

US4456587 describes an aqueous mixture to be sprayed onto the plant-leaves to provide with the slow release of the insect pheromone Gossyplure (1:1 mixture of (7Z,11E)- and (7Z,11Z)-hexadeca-7,11-dien-1-yl acetate. The aqueous mixture comprises polyvinyl alcohol and polyvinylpyrrolidone, that are dissolved in water before adding the solution comprising the pheromone. The polymeric mixture is cured on the leaves and can deliver the active ingredients during a longer period of time. The pheromone is not complexed in a cyclodextrine ring.

SUMMARY OF THE INVENTION

However, a problem that a spray preparation in which a cyclodextrin powder enclosing an insect sex pheromone substance is dispersed in water provides strikingly quick initial release of the sex pheromone substance after being sprayed so that about a half of the content of the sex pheromone substance is released immediately after being sprayed, has been confirmed. Therefore, the effective release period has been extremely short, making practical use difficult.

The present invention has been made in view of the above-mentioned circumstance, and provides a water dispersion type sex pheromone sustained release preparation which has solved the problems in the prior art, makes it possible to suppress excess release at the initial stage after being sprayed, can release a sex pheromone substance at a constant amount for a predetermined period, and can be sprayed by using a common sprayer.

The present inventors have done intensive studies so as to achieve the above-mentioned object and consequently found that excess release at the initial period after being sprayed can be suppressed, an effective release period is extended and a sex pheromone substance is released at a constant amount for a predetermined period by using a preparation comprising an insect sex pheromone substance which is enclosed in a ring of a cyclodextrin, a non-inclusion cyclodextrin which does not enclose the insect sex pheromone substance, and a water-soluble polymer, in a water solvent, and completed the present invention.

The present invention provides a water dispersion type sex pheromone sustained release spray preparation, comprising insect sex pheromone substance which is enclosed in a ring of a cyclodextrin, an inclusion cyclodextrin which encloses the insect sex pheromone substance, a non-inclusion cyclodextrin which does not enclose the insect sex pheromone substance, a water-soluble polymer, and water, wherein the insect sex pheromone substance is one or more insect sex pheromone substances selected from the group consisting of acetates, esters, aldehydes, alcohols, ketones, epoxides and hydrocarbons, each having 4 to 23 carbon atoms in total inclusive of the carbon number of functional groups; said inclusion cyclodextrin and said non-inclusion cyclodextrin may be of the same or different types and are selected from the group consisting of α-cyclodextrin, β-cyclodextrin and γ-cyclodextrin; said water-soluble polymer is selected from polyvinyl alcohols; the amount of the inclusion cyclodextrin is 1.0 to 1.1 mol or 2.0 to 2.2 mol per mol of the sex pheromone substance, and said non-inclusion cyclodextrin is comprised in a molar amount of 0.1 to 1.5 times as much as a molar amount of said insect sex pheromone substance.

Furthermore, the present invention provides a method for producing a water dispersion type sex pheromone sustained release spray preparation, comprising a step of preparing an aqueous suspension of insect sex pheromone substance which is enclosed by a cyclodextrin, and a non-inclusion cyclodextrin which does not enclose the insect sex pheromone substance, and adding an aqueous solution of water-soluble polymer selected from polyvinyl alcohols to the aqueous suspension.

According to the present invention, a water dispersion type sex pheromone sustained release preparation which can release insect sex pheromone substance at a constant amount for a predetermined period and can be sprayed by using a common sprayer, is provided.

BRIEF DESCRIPTION OF THE DRAWINGS

FIG. 1 shows the relationships between the number of days elapsed and the residual ratio of the sex pheromone substance in Examples 1 to 3 and Comparative Examples 1 and 2;
FIG. 2 shows the relationships between the number of days elapsed and the residual ratio of the sex pheromone substance in Examples 4 to 6 and Comparative Examples 1 and 3;
FIG. 3 shows the relationships between the number of days elapsed and the residual ratio of the sex pheromone substance in Examples 7 to 9 and Comparative Examples 4 and 5; and
FIG. 4 shows the numbers of male insects attracted into the pheromone traps in Example 10 and Comparative Example 6.

DETAILED DESCRIPTION OF THE PREFERRED EMBODIMENTS

Hereinafter the present invention will be explained in more detail.

The "an insect sex pheromone substance" used herein includes one or more kinds of insect sex pheromone substances.

Examples of the insect sex pheromone substance to be used in the present invention may include one or more insect sex pheromone substances selected from the group consisting of acetates, esters, aldehydes, alcohols, ketones, epoxides and hydrocarbons, each having 4 to 23 carbon atoms in total inclusive of the carbon number of functional groups.

Specific examples of the insect sex pheromone substance which is an acetate having 4 to 23 carbon atoms in total inclusive of the carbon number of functional group may include Z,Z-7,11-hexadecadienyl acetate and Z,E-7,11-hexadecadienyl acetate, which are the sex pheromone substances of pink bollworm (Pectinophora gossypiella); Z-8-dodecenyl acetate, which is the sex pheromone substance of oriental fruit moth (Grapholita molesta); E-5-decenyl acetate, which is the sex pheromone substance of peach twig borer (Anarsia lineatella); Z-9-dodecenyl acetate, which is the sex pheromone substance of grape berry moth (Endopiza viteana); E,Z-7,9-dodecadienyl acetate, which is the sex pheromone substance of European grape vine moth (Lobesia botrana); E-11-tetradecenyl acetate, which is the sex pheromone substance of light brown apple moth (Epiphyas postvittana); Z-11-tetradecenyl acetate, which is the sex pheromone substance of leaf roller (Tortricidae); E,E-8,10-dodecadienyl acetate, which is the sex pheromone substance of soybean pod borer (Leguminivora glycinivorella); Z,E-9,11-tetradecadienyl acetate and Z,E-9,12-tetradecadienyl acetate, which are the sex pheromone substances of common cutworm (Spodoptera litura); Z-9-tetradecenyl acetate, which is the sex pheromone substance of fall armyworm; E-4-tridecenyl acetate, which is the sex pheromone substance of tomato pinworm; Z-13-hexadecen-11-ynyl acetate, which is the sex pheromone substance of pine processionary moth; and n-dodecyl acetate, which is the sex pheromone substance of sugarcane wireworm (Melanotus okinawensis).

Specific examples of the insect sex pheromone substance which is an ester having 4 to 23 carbon atoms in total inclusive the carbon number of functional group may include Z-7,15-hexadecadien-4-olide, which is the sex pheromone substance of yellowish elongate chafer (Heptophylla picea); E-9,11-dodecadienyl butyrate and E-9,11-dodecadienyl hexanate, which are the sex pheromone substances of sugarcane wireworm (Melanotus sakishimensis); (R)-Z-5-(oct-1-enyl)-oxacyclopentan-2-one, which is the sex pheromone substance of cupreous chafer (Anomala cuprea); hexyl hexanoate, E-2-hexenyl hexanoate and octyl butyrate, which are the sex pheromone substances of rice leaf bug (Trigonotylus caelestialium); S-5-methyl-2-(1-propen-2-yl)-4-hexenyl 3-methyl-2-butenoate, which is the sex pheromone substance of vine mealy bug (Pseudococcus maritimus); and gentisylquinone isovalerate, which is the sex pheromone substance of German cockroach (Blattella germanica).

Specific examples of the insect sex pheromone substance which is an aldehyde having 4 to 23 carbon atoms in total inclusive of the carbon number of functional group may include Z-11-hexadecenal, which is the sex pheromone substance of American bollworm (Helicoverpa armigera); Z-9-hexadecenal, which is the sex pheromone substance of oriental tobacco budworm (Helicoverpa assulta); and Z-11-hexadecenal and Z-13-octadecenal, which are the sex pheromone substances of rice stem borer (Chilo suppressalis).

Specific examples of the insect sex pheromone substance which is an alcohol having 4 to 23 carbon atoms in total inclusive of the carbon number of functional group may include E,E-8,10-dodecadienol, which is the sex pheromone substance of codling moth (Cydia pomonella); and 2-butanol, which is the sex pheromone substance of Dasylepida ishigakiensis.

Specific examples of the insect sex pheromone substance which is a ketone having 4 to 23 carbon atoms in total inclusive of the carbon number of functional group may include Z-7-eicosen-11-one, which is the sex pheromone substance of peach fruit moth (Carposina sasakii).

Specific examples of the insect sex pheromone substance which is an epoxide having 4 to 23 carbon atoms in total inclusive of the carbon number of functional group may include 7,8-epoxy-2-methyloctadecane, which is the sex pheromone substance of gypsy moth (Lymantria dispar).

Specific examples of the insect sex pheromone substance which is a hydrocarbon having 4 to 23 carbon atoms in total inclusive of the carbon number of functional group may include 5,9-dimethylpentadecane and 5,9-dimethylhexadecane, which are the sex pheromone substances of coffee leaf miner; 14-methyl-1-octadecene, which is the sex pheromone substance of peach leaf miner (Lyonetia clerkella); and Z-9-tricosenetricosene, which is the sex pheromone substance of housefly (Musca domestica).

Specific examples of the insect sex pheromone substance which is a combination of two or more compounds having different functional groups, each having 4 to 23 carbon atoms in total inclusive of the carbon number of functional group, may include Z-11-hexadecenyl acetate and Z-11-hexadecenal, which are the sex pheromone substances of diamondback moth (Plutella xylostella); Z-11-hexadecenyl acetate, Z-11-hexadecenol and n-hexadecyl acetate, which are the sex pheromone substances of cabbage armyworm (Mamestra brassicae); Z,E-9,12-tetradecadienyl acetate and Z-9-tetradecenol, which are the sex pheromone substances of beet armyworm (Spodoptera exigua); hexyl butyrate, E-2-hexenyl butyrate and E-4-oxo-2-hexenal, which are the sex pheromone substances of sorghum plant bug (Stenotus rubrovittatus); and 6R-Z-3,9-dimethyl-6-isopropenyl-3,9-decadienyl propionate and 6R-Z-3,9-dimethyl-6-isopropenyl-3,9-decadienol, which are the sex pheromone substances of white peach scale (Pseudaulacaspis pentagona).

As for an amount of the insect sex pheromone substance to be used, from the viewpoints of the weight of the insect sex pheromone substance required per unit area of a field and the weight of a spray liquid per unit area of the field, water dispersion type sex pheromone sustained release preparations, each comprising insect sex pheromone substance of preferably 0.001 to 5.0% by weight, more preferably 0.01 to 3.0% by weight, are sprayed in an amount of preferably 5 to 500 L, more preferably 50 to 200 L per decare of the field. When two or more sex pheromone substances are used, "an amount of the sex pheromone substance" means a total amount of the two or more sex pheromone substances.

When the content of the insect sex pheromone substance in the water dispersion type sex pheromone sustained release preparation is less than 0.001% by weight, the amount of the spray liquid per unit area of the field may become excess. When the content is more than 5.0% by weight, the amount of the spray liquid per unit area of the field is small and a special sprayer may be required.

According to the present invention, the water dispersion type sex pheromone sustained release preparation comprises an inclusion cyclodextrin which encloses an insect sex pheromone substance in the ring and a non-inclusion cyclodextrin which does not enclose the sex pheromone substance. The inclusion cyclodextrin and the non-inclusion cyclodextrin may be the same type of cyclodextrin or different types of cyclodextrins.

Cyclodextrin which encloses an insect sex pheromone substance is selected from the group consisting of $\alpha$-cyclodextrin, $\beta$-cyclodextrin and $\gamma$-cyclodextrin. Any of these three types of cyclodextrins can be selected optionally according to the structure and the size of the molecule and the like of the sex pheromone substance to be enclosed. Furthermore, any of these cyclodextrins may be used alone, or in combination of two or more types thereof. Examples of commercial products may include CAVAMAX W6 (product of Wacker Chemie AG) as $\alpha$-cyclodextrin, CAVAMAX W7 (product of Wacker Chemie AG) as $\beta$-cyclodextrin and CAVAMAX W8 (product of Wacker Chemie AG) as $\gamma$-cyclodextrin.

The amount of the cyclodextrin which encloses an insect sex pheromone substance is determined based on the most stable inclusion complex. For example, in the case where the inclusion complex becomes stable when the inclusion stoichiometric ratio of the sex pheromone substance to cyclodextrin is 1:1, the amount of the cyclodextrin is 1.0 to 1.1 mol, preferably 1.0 to 1.03 mol per mol of the sex pheromone substance. Alternatively, in the case where the inclusion complex becomes stable when the inclusion stoichiometric ratio of the sex pheromone substance to cyclodextrin is 1:2, the amount of the cyclodextrin is 2.0 to 2.2 mol, preferably 2.0 to 2.06 mol per mol of the sex pheromone substance.

The inclusion stoichiometric ratio of the sex pheromone substance to cyclodextrin for giving a stable inclusion complex depends on the type of the sex pheromone substance and the type of the cyclodextrin. It can be determined by a method such as the continuous changing method described in "Part V, 4. Method for Determining Stability Constant" in "Nanomaterial Cyclodextrins", edited by the Society of Cyclodextrins, Japan, Yoneda Shuppan. Specific examples which give stable inclusion complexes when the inclusion stoichiometric ratio is 1:1 may include a combination of a sex pheromone substance such as Z-8-dodecenyl acetate, E,E-8,10-dodecadienyl acetate, E,Z-7,9-dodecadienyl acetate, Z-11-hexadecenal, Z-9-hexadecenal or E,E-8,10-dodecadienol, and $\alpha$-cyclodextrin or $\beta$-cyclodextrin; and a combination of Z-9-hexadecenal, E,E-8,10-dodecadienol or the like and $\gamma$-cyclodextrin. Specific examples which give stable inclusion complexes when the inclusion stoichiometric ratio is 1:2 may include a combination of a sex pheromone substance such as Z-8-dodecenyl acetate, E,E-8,10-dodecadienyl acetate, E,Z-7,9-dodecadienyl acetate or Z-11-hexadecenal, and $\gamma$-cyclodextrin.

Furthermore, an inclusion complex of the sex pheromone substance and cyclodextrin is very stable. When an inclusion complex is formed at the above-mentioned inclusion stoichiometric ratio, the inclusion complex having the inclusion stoichiometric ratio can be isolated almost quantitatively.

Water is used as a solvent when an insect sex pheromone substance is enclosed by the cyclodextrin. Although the amount of water is not particularly limited, it is preferably 500 g to 15,000 g, more preferably 8,000 g to 15,000 g per mol of the $\alpha$-cyclodextrin and/or $\gamma$-cyclodextrin in view of solubility in water. Furthermore, it is preferably 3,000 g to 15,000 g, more preferably 7,000 to 15,000 g per mol of $\beta$-cyclodextrin since the solubility of the $\beta$-cyclodextrin in water is relatively low.

In addition, water can also be used for dissolving the water-soluble polymer and the non-inclusion cyclodextrin which does not enclose the insect sex pheromone substance. The preferable final content of water which is comprised by the water dispersion type sex pheromone sustained release preparation is preferably 2,000 to 25,000,000 g per mol of the insect sex pheromone substance in consideration of the content of the pheromone substance in the water dispersion type sex pheromone sustained release preparation, the solubility of the water-soluble polymer in water and the liquid viscosity of the water dispersion type sex pheromone sustained release preparation.

As the method for producing an insect sex pheromone substance which is enclosed by cyclodextrin according to the present invention, a known method, a method of combining two or more known steps, or the like can be used. Examples may include a method comprising the steps of dissolving a cyclodextrin in water to form an aqueous solution, adding an insect sex pheromone substance to the solution and stirring to form a suspension liquid of the insect sex pheromone substance which is enclosed by cyclodextrin; a method comprising a step of filtering the above-mentioned suspension liquid to produce a solid of the insect sex pheromone substance which is enclosed by cyclodextrin; and a method comprising a step of lyophilizing the above-mentioned suspension liquid to produce a solid of the insect sex pheromone substance which is enclosed by cyclodextrin. The obtained sex pheromone substance which is enclosed by cyclodextrin may be used as an aqueous suspension liquid directly produced, or as an aqueous suspension liquid obtained by dispersing the solid of the insect sex pheromone substance which is enclosed by cyclodextrin in water after removal of water by filtration, lyophilization or the like.

The temperature for forming the cyclodextrin enclosing the insect sex pheromone substance is preferably 30 to 95°C, more preferably 60 to 80°C with respect to $\alpha$-cyclodextrin or $\beta$-cyclodextrin, while the temperature is preferably 5 to 95°C, more preferably 25 to 30°C with respect to $\gamma$-cyclodextrin.

The non-inclusion cyclodextrin which does not enclose the sex pheromone substance is selected from the group consisting of: $\alpha$-cyclodextrin, $\beta$-cyclodextrin and $\gamma$-cyclodextrin. Regarding these three types of cyclodextrins, the type of the non-inclusion cyclodextrin may be the same as or different from the type of the cyclodextrin which encloses the insect sex pheromone substance. Furthermore, any of these cyclodextrins may be used alone, or in combination of two or more types thereof.

The non-inclusion cyclodextrin that does not enclose the insect sex pheromone substance is in an molar amount of 0.1 to 1.5, preferably 0.5 to 1.0 time as much as an total molar amount of the insect sex pheromone substance which is enclosed in the ring of the cyclodextrin. This amount of the non-inclusion cyclodextrin contains the amount of the cyclodextrin which has not enclosed an insect sex pheromone substance in the preparation of the cyclodextrin which encloses the insect sex pheromone substance. When the amount of the non-inclusion cyclodextrin is less than 0.1 times, control of the release of the sex pheromone substance may not be obtained. When the amount is more than 1.5 times, the sex pheromone substance may remain in the water dispersion type sustained release preparation at the end of release, shortening the effective release period.

The content of the non-inclusion cyclodextrin which does not enclose the insect sex pheromone substance and the content of inclusion-cyclodextrin which encloses the insect sex pheromone substance in the water dispersion type sex pheromone sustained release preparation can preferably be determined by the changes in chemical shifts in $^1$H-NMR, a nuclear Overhauser effect in two-dimensional NMR and a measurement of a self-diffusion coefficient by using pulsed-field gradient NMR, and the like.

The non-inclusion cyclodextrin which does not enclose the sex pheromone substance is preferably added to the aqueous suspension comprising the sex pheromone substance enclosed by the cyclodextrin. After the addition of the non-inclusion cyclodextrin which does not enclose the sex pheromone substance, the aqueous suspension is dispersed homogeneously by a stirrer or homogenizer. Alternatively, when the cyclodextrin which encloses the sex pheromone substance and the non-inclusion cyclodextrin which does not enclose the sex pheromone substance are of the same type, an excess amount of cyclodextrin can be added at the time of allowing the sex pheromone substance to be enclosed by the cyclodextrin.

Water-soluble polymer may include polyvinyl alcohols; polyethylene glycols; polyvinyl pyrrolidones; sodium polyacrylates; polyacrylamides; carboxyvinyl polymers; polysaccharide-based natural polymers such as gum arabic, carrageenan, guar gum, locust bean gum, pectin, tragacanth and starch; microorganism polysaccharide-based natural polymers such as pullulan, xanthane gum and dextrin; animal-based proteins such as gelatin, casein and sodium chondroitinate; cellulose derivatives such as methyl cellulose, ethyl cellulose, carboxymethyl cellulose, hydroxyethyl cellulose and hydroxypropyl cellulose; and starch derivatives such as oxidized starch, modified starch and phosphorylated starch. According to the present invention the water-soluble polymer is selected from polyvinyl alcohols. Polyvinyl alcohols are advantageous in consideration of biodegredability and fine controllability of water resistance and viscosity by changing a polymerization degree and a saponification degree and the like. Examples of the polyvinyl alcohols may include J POVAL JM-17 (average polymerization degree of 1,700, saponification degree of 96.9 mol%, product of JAPAN VAM & POVAL Co., Ltd.), J POVAL JM-26 (average polymerization degree of 2,600, saponification degree of 96.0 mol%, product of JAPAN VAM & POVAL Co., Ltd.).

The above-mentioned polyvinyl alcohol has a saponification degree of preferably 90.0 to 99.0 mol%, more preferably 95.0 to 98.0 mol% in consideration of water resistance and reduction of the residual amount of the sex pheromone substance in the polymer. When the polyvinyl alcohol has a saponification degree of less than 90.0 mol%, the water dispersion type sex pheromone sustained release preparation may be caused to outflow by rainfall or the like after being sprayed since such polyvinyl alcohol has low water resistance. When the polyvinyl alcohol has a saponification degree of more than 99.0 mol%, the sex pheromone substance may remain in the water dispersion type sustained release preparation at a later stage of release, thereby shortening the effective release period, and spraying by using a common sprayer may become impossible because of increase of the liquid viscosity of the water dispersion type sustained release preparation. The saponification degree of the polyvinyl alcohol can be measured based on the polyvinyl alcohol test method of JIS K 6726.

The water-soluble polymer has an average polymerization degree of preferably 500 to 5, 000, more preferably 1,500 to 3,000, in consideration of water resistance and reduction of the residual amount of the sex pheromone substance in the polymer at a later stage of release. When the average polymerization degree of the water-soluble polymer is less than 500, the water dispersion type sex pheromone sustained release preparation may be caused to outflow by rainfall or the like after being sprayed since the preparation has low water resistance. When the average polymerization degree is more than 5,000, the sex pheromone substance may remain in the water dispersion type sustained release preparation at a later stage of release, shortening the effective release period. The average polymerization degree of the polyvinyl alcohol can be measured in accordance with the polyvinyl alcohol test method of JIS K 6726.

The content of the water-soluble polymer is preferably 0.01 to 20.0% by weight, more preferably 0.05 to 10.0% by weight in the water dispersion type sex pheromone sustained release preparation in consideration of water resistance and solution viscosity. When the content of the water-soluble polymer is less than 0.01% by weight, the water dispersion type sex pheromone sustained release preparation may be caused to outflow by rainfall or the like after being sprayed since the preparation has low water resistance. When the content of the water-soluble polymer is more than 20.0% by weight, the sex pheromone substance may remain in the water dispersion type sustained release preparation at a later stage of release, shortening the effective release period, and spraying by using a common sprayer may become impossible since the liquid viscosity of the water dispersion type sustained release preparation is increased.

As for the water-soluble polymer, it is preferable to prepare the above-mentioned aqueous dispersion of the sex pheromone substance which is enclosed in the cyclodextrin and the non-inclusion cyclodextrin which does not enclose the sex pheromone substance, and thereafter add a predetermined amount of an aqueous solution of a polyvinyl alcohol which has been dissolved with hot water in advance, in view of the solubility of the water-soluble polymer and the dispersibility and homogeneity of the water dispersion type sustained release preparation.

Therefore, a method for producing the water dispersion type sex pheromone sustained release preparation comprises at least the steps of mixing an aqueous suspension of insect sex pheromone substance which is enclosed by cyclodextrin, with the non-inclusion cyclodextrin which does not enclose the insect sex pheromone substance, and the water-soluble polymer.

A sustained release preparation in which a cyclodextrin powder which encloses an insect sex pheromone substance is dispersed in water provides strikingly quick initial release after being sprayed so that about a half amount of the content of the sex pheromone substance is released immediately after being sprayed. On the other hand, according to the present invention, the sustained release preparation can suppress the initial excess release after being sprayed and makes it possible to release at a constant amount in a predetermined period. This is based on the following reason. The inclusion complex of an organic compound in a cyclodextrin gradually dissociates the organic compound by an equilibrium reaction with water molecules in the presence of a trace amount of moisture to show a sustained release performance. It is considered that the non-inclusion cyclodextrin in the sustained release preparation, being co-existent with the inclusion cyclodextrin complex which encloses the insect sex pheromone substance, will enclose again the insect sex pheromone substance which has been excessively dissociated from the inclusion cyclodextrin complex in an initial stage after being sprayed. It is also considered that the cyclodextrin inclusion complex which encloses the insect sex pheromone substance and the non-inclusion cyclodextrin are contained homogeneously owing to the presence of the water-soluble polymer, thereby adjusting the supply of the moisture which promotes the dissociation of the sex pheromone substance from the cyclodextrin. Furthermore, it is considered that since the water-soluble polymer does not allow the insect sex pheromone substance to permeate, it becomes possible to control the release surface area of the insect sex pheromone substance from the sustained release preparation.

EXAMPLES

Hereinafter the present invention will be explained specifically with referring to Examples and Comparative Examples. However, it should not be construed that the present invention is limited by the following Examples. In the following description, the "parts by weight" of each component means an amount for giving 100 parts by weight of the water dispersion type sex pheromone sustained release preparation in total. In other words, it means the relative amount of each component with respect to 100 parts by weight of the obtained water dispersion type sex pheromone sustained release preparation.

<Example 1>

Ion exchanged water (50.0 parts by weight) and β-cyclodextrin (5.1 parts by weight, CAVAMAX W7 produced by Wacker Chemie AG) were added to a glass reactor equipped with a thermometer and a homogenizer as a stirrer, and the temperature was raised to 70°C under stirring with the homogenizer (5,000 rpm). After the dissolution of β-cyclodextrin, E,E-8,10-dodecadienyl acetate (1.0 parts by weight), which is a sex pheromone component of Leguminivora glycinivorella, was added. The solution was stirred at 70°C for 1 hour, cooled to 25°C and stirred for 2 hours to produce a dispersion liquid of β-cyclodextrin enclosing E,E-8,10-dodecadienyl acetate.

To the dispersion liquid, added were a non-inclusion β-cyclodextrin which is a solid at 25°C (5.1 parts by weight, CAVAMAX W7 produced by Wacker Chemie AG) and a polyvinyl alcohol (5.0 parts by weight, polymerization degree of 1,700, saponification degree of 96.9 mol%, J POVAL JM-17 produced by JAPAN VAM & POVAL Co., Ltd.) which had been dissolved in ion exchanged water (33.8 parts by weight). Stirring at 25°C for 1 hour by the homogenizer (5,000 rpm) resulted in a water dispersion type sex pheromone sustained release preparation. The composition of the obtained water dispersion type sex pheromone sustained release preparation is shown in Table 1.

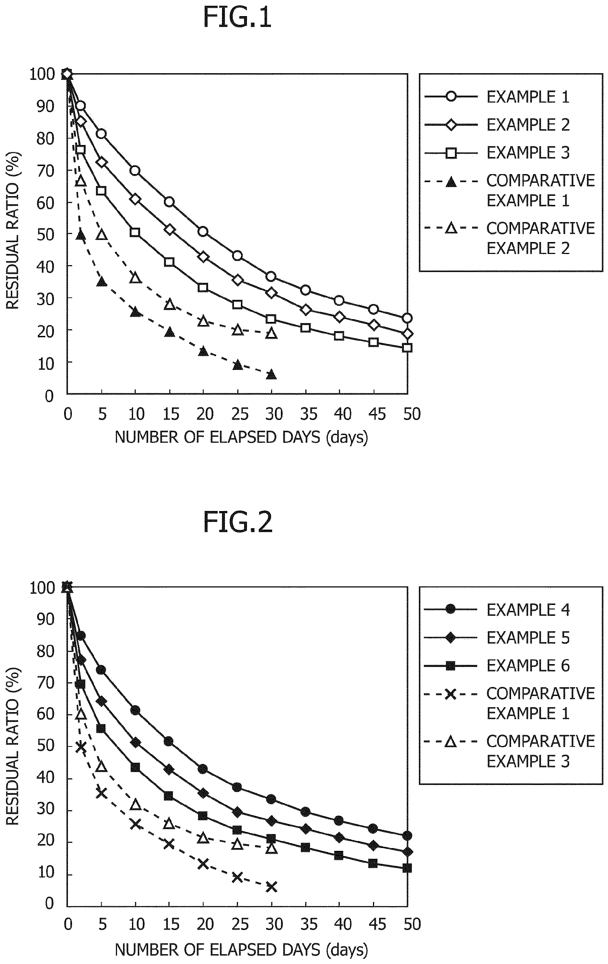

The 200 µL (20 µL × 10 droplets) of the obtained water dispersion type sex pheromone sustained release preparation was applied dropwise to a filter paper (70ϕ, JIS P3801 No. 2, produced by Advantec), and left in a constant temperature and humidity chamber (temperature of 25°C, humidity of 55%, wind velocity of 0.44 m/s). The residual ratio of the sex pheromone substance, E,E-8,10-dodecadienyl acetate, was quantified, corresponding the number of elapsed days. The results thereof are shown in Table 2 and FIG. 1.

<Confirmation of Inclusion Amount of β-cyclodextrin>

A dispersion liquid of β-cyclodextrin enclosing E,E-8,10-dodecadienyl acetate was produced from an aqueous solution of β-cyclodextrin in the same manner as in the above. The β-cyclodextrin enclosing E,E-8,10-dodecadienyl acetate which had precipitated as a crystal in this dispersion liquid was filtered, washed twice with ion exchanged water (30.0 g) to remove the non-inclusion β-cyclodextrin, and dried under a reduced pressure, and then an inclusion stoichiometric ratio and a yield were measured by $^1$H-NMR. A crystal (5.93 g) of the β-cyclodextrin enclosing E,E-8,10-dodecadienyl acetate was obtained at the inclusion stoichiometric ratio of E,E-8,10-dodecadienyl acetate to β-cyclodextrin of 1.04:1.00 and the yield of 97.9%.

<Example 2>

To a dispersion liquid of β-cyclodextrin enclosing E,E-8,10-dodecadienyl acetate which was produced in the same manner as in Example 1, added were a non-inclusion β-cyclodextrin which is a solid at 25°C (3.8 parts by weight, CAVAMAX W7 produced by Wacker Chemie AG) and a polyvinyl alcohol (5.0 parts by weight, polymerization degree of 1,700, saponification degree of 96.9 mol%, J POVAL JM-17 produced by JAPAN VAM & POVAL Co., Ltd.) which had been dissolved in ion exchanged water (35.1 parts by weight). Stirring at 25°C for 1 hour by a homogenizer (5,000 rpm) resulted in a water dispersion type sex pheromone sustained release preparation. The composition of the obtained water dispersion type sex pheromone sustained release preparation is shown in Table 1.
For the obtained water dispersion type sex pheromone sustained release preparation, the residual ratio of the sex pheromone substance, E,E-8,10-dodecadienyl acetate, was quantified, corresponding to the number of elapsed days in the same manner as in Example 1. The results thereof are shown in Table 2 and FIG. 1.

<Example 3>

To a dispersion liquid of β-cyclodextrin enclosing E,E-8,10-dodecadienyl acetate which was produced in the same manner as in Example 1, added were a non-inclusion β-cyclodextrin which is a solid at 25°C (2.5 parts by weight, CAVAMAX W7 produced by Wacker Chemie AG) and a polyvinyl alcohol (5.0 parts by weight, polymerization degree of 1,700, saponification degree of 96.9 mol%, J POVAL JM-17 produced by JAPAN VAM & POVAL Co., Ltd.) which had been dissolved in ion exchanged water (36.4 parts by weight). Stirring at 25°C for 1 hour by a homogenizer (5,000 rpm) resulted in a water dispersion type sex pheromone sustained release preparation. The composition of the obtained water dispersion type sex pheromone sustained release preparation is shown in Table 1.
For the obtained water dispersion type sex pheromone sustained release preparation, the residual ratio of the sex pheromone substance, E,E-8,10-dodecadienyl acetate, was quantified, corresponding to the number of elapsed days in the same manner as in Example 1. The results thereof are shown in Table 2 and FIG. 1.

<Example 4>

To a dispersion liquid of β-cyclodextrin enclosing E,E-8,10-dodecadienyl acetate which was produced in the same manner as in Example 1, added were a non-inclusion β-cyclodextrin which is a solid at 25°C (5.1 parts by weight, CAVAMAX W7 produced by Wacker Chemie AG) and a polyvinyl alcohol (3.0 parts by weight, polymerization degree of 1,700, saponification degree of 96.9 mol%, J POVAL JM-17 produced by JAPAN VAM & POVAL Co., Ltd.) which had been dissolved in ion exchanged water (35.8 parts by weight). Stirring at 25°C for 1 hour by a homogenizer (5,000 rpm) resulted in a water dispersion type sex pheromone sustained release preparation. The composition of the obtained water dispersion type sex pheromone sustained release preparation is shown in Table 1.
For the obtained water dispersion type sex pheromone sustained release preparation, the residual ratio of the sex pheromone substance, E,E-8,10-dodecadienyl acetate, was quantified, corresponding the number of elapsed days in the same manner as in Example 1. The results thereof are shown in Table 2 and FIG. 2.

<Example 5>

To a dispersion liquid of β-cyclodextrin enclosing E,E-8,10-dodecadienyl acetate which was produced in the same manner as in Example 1, added were a non-inclusion β-cyclodextrin which is a solid at 25°C (3.8 parts by weight, CAVAMAX W7 produced by Wacker Chemie AG) and a polyvinyl alcohol (3.0 parts by weight, polymerization degree of 1,700, saponification degree of 96.9 mol%, J POVAL JM-17 produced by JAPAN VAM & POVAL Co., Ltd.) which had been dissolved in ion exchanged water (37.1 parts by weight). Stirring at 25°C for 1 hour by a homogenizer (5,000 rpm) resulted in a water dispersion type sex pheromone sustained release preparation. The composition of the obtained water dispersion type sex pheromone sustained release preparation is shown in Table 1.
For the obtained water dispersion type sex pheromone sustained release preparation, the residual ratio of the sex pheromone substance, E,E-8,10-dodecadienyl acetate, was quantified, corresponding the number of elapsed days in the same manner as in Example 1. The results thereof are shown in Table 2 and FIG. 2.

<Example 6>

To a dispersion liquid of β-cyclodextrin enclosing E,E-8,10-dodecadienyl acetate which was produced in the same manner as in Example 1, added were a non-inclusion β-cyclodextrin which is a solid at 25°C (2.5 parts by weight, CAVAMAX W7 produced by Wacker Chemie AG) and a polyvinyl alcohol (3.0 parts by weight, polymerization degree of 1,700, saponification degree of 96.9 mol%, J POVAL JM-17 produced by JAPAN VAM & POVAL Co., Ltd.) which had been dissolved in ion exchanged water (38.4 parts by weight). Stirring at 25°C for 1 hour by a homogenizer (5,000 rpm) resulted in a water dispersion type sex pheromone sustained release preparation. The composition of the obtained water dispersion type sex pheromone sustained release preparation is shown in Table 1.

For the obtained water dispersion type sex pheromone sustained release preparation, the residual ratio of the sex pheromone substance, E,E-8,10-dodecadienyl acetate, was quantified, corresponding the number of elapsed days in the same manner as in Example 1. The results thereof are shown in Table 2 and FIG. 2.

<Comparative Example 1>

To a dispersion liquid of β-cyclodextrin enclosing E,E-8,10-dodecadienyl acetate which was produced in the same manner as in Example 1, added was ion exchanged water (43.9 parts by weight). Stirring at 25°C for 1 hour by a homogenizer (5,000 rpm) resulted in a water dispersion type sex pheromone sustained release preparation. The composition of the obtained water dispersion type sex pheromone sustained release preparation is shown in Table 1.

For the obtained water dispersion type sex pheromone sustained release preparation, the residual ratio of the sex pheromone substance, E,E-8,10-dodecadienyl acetate, was quantified, corresponding the number of elapsed days in the same manner as in Example 1. The results thereof are shown in Table 2 and FIGS. 1 and 2.

<Comparative Example 2>

To a dispersion liquid of β-cyclodextrin enclosing E,E-8,10-dodecadienyl acetate which was produced in the same manner as in Example 1, added was a polyvinyl alcohol (5.0 parts by weight, polymerization degree of 1,700, saponification degree of 96.9 mol%, J POVAL JM-17 produced by JAPAN VAM & POVAL Co., Ltd.) which had been dissolved in ion exchanged water (38.9 parts by weight) at 25°C. Stirring at 25°C for 1 hour by a homogenizer (5,000 rpm) resulted in a water dispersion type sex pheromone sustained release preparation. The composition of the obtained water dispersion type sex pheromone sustained release preparation is shown in Table 1.

For the obtained water dispersion type sex pheromone sustained release preparation, the residual ratio of the sex pheromone substance, E,E-8,10-dodecadienyl acetate, was quantified, corresponding the number of elapsed days in the same manner as in Example 1. The results thereof are shown in Table 2 and FIG. 1.

<Comparative Example 3>

To a dispersion liquid of β-cyclodextrin enclosing E,E-8,10-dodecadienyl acetate which was produced in the same manner as in Example 1, added was a polyvinyl alcohol (3.0 parts by weight, polymerization degree of 1,700, saponification degree of 96.9 mol%, J POVAL JM-17 produced by JAPAN VAM & POVAL Co., Ltd.) which had been dissolved in ion exchanged water (40.9 parts by weight) at 25°C. Stirring at 25°C for 1 hour by a homogenizer (5,000 rpm) resulted in a water dispersion type sex pheromone sustained release preparation. The composition of the obtained water dispersion type sex pheromone sustained release preparation is shown in Table 1.

For the obtained water dispersion type sex pheromone sustained release preparation, the residual ratio of the sex pheromone substance, E,E-8,10-dodecadienyl acetate, was quantified, corresponding to the number of elapsed days in the same manner as in Example 1. The results thereof are shown in Table 2 and FIG. 2.

Table 1

| | inclusion-cyclodextrin | | | non-inclusion cyclodextrin | polyvinyl alcohol | water |
| --- | --- | --- | --- | --- | --- | --- |
| | sex pheromone *1 (weight parts) | cyclodextrin *2 (weight parts) | total (weight parts) | *2 (weight parts) | *3 (weight parts) | (weight parts) |
| Example1 | 1.0 | 5.1 | 6.1 | 5.1 | 5.0 | 83.8 |
| Example2 | 1.0 | 5.1 | 6.1 | 3.8 | 5.0 | 85.1 |

(continued)

| | inclusion-cyclodextrin | | | non-inclusion cyclodextrin | polyvinyl alcohol | water |
|---|---|---|---|---|---|---|
| | sex pheromone *1 (weight parts) | cyclodextrin *2 (weight parts) | total (weight parts) | *2 (weight parts) | *3 (weight parts) | (weight parts) |
| Example3 | 1.0 | 5.1 | 6.1 | 2.5 | 5.0 | 86.4 |
| Example4 | 1.0 | 5.1 | 6.1 | 5.1 | 3.0 | 85.8 |
| Example5 | 1.0 | 5.1 | 6.1 | 3.8 | 3.0 | 87.1 |
| Example6 | 1.0 | 5.1 | 6.1 | 2.5 | 3.0 | 88.4 |
| Comp.EX. 1 | 1.0 | 5.1 | 6.1 | 0.0 | 0.0 | 93.9 |
| Comp.EX. 2 | 1.0 | 5.1 | 6.1 | 0.0 | 5.0 | 88.9 |
| Comp.Ex. 3 | 1.0 | 5.1 | 6.1 | 0.0 | 3.0 | 90.9 |

*1 E,E-8,10-dodecadienyl acetate was used as a sex pheromone substance.
*2 β-cydodextrin was used.
*3 Polyvinyl alcohol (polymerization degree of 1700, saponification degree of 96.9 mol%) was used.

Table 2

| | residual ratio (%) at the number of elapsed days | | | | | | | | | | | |
| --- | --- | --- | --- | --- | --- | --- | --- | --- | --- | --- | --- | --- |
| | 0days | 2days | 5days | 10days | 15days | 20days | 25days | 30days | 35days | 40days | 45days | 50days |
| Example1 | 100.0 | 90.1 | 81.3 | 69.7 | 59.8 | 50.7 | 43.2 | 36.6 | 32.4 | 29.1 | 26.4 | 23.6 |
| Example2 | 100.0 | 85.1 | 72.4 | 60.8 | 51.3 | 42.9 | 35.5 | 31.5 | 26.4 | 24.1 | 21.5 | 18.7 |
| Example3 | 100.0 | 76.2 | 63.5 | 50.4 | 41.1 | 33.2 | 27.7 | 23.2 | 20.6 | 18.0 | 16.0 | 14.2 |
| Example4 | 100.0 | 84.7 | 74.0 | 61.3 | 51.7 | 42.9 | 37.2 | 33.5 | 29.6 | 26.9 | 24.3 | 22.0 |
| Example5 | 100.0 | 77.2 | 64.3 | 51.4 | 42.9 | 35.4 | 29.6 | 26.9 | 24.3 | 21.6 | 19.2 | 17.1 |
| Example6 | 100.0 | 69.5 | 55.7 | 43.5 | 34.5 | 28.4 | 23.8 | 21.0 | 18.3 | 16.0 | 13.5 | 12.0 |
| Comp.Ex.1 | 100.0 | 49.8 | 35.4 | 25.8 | 19.5 | 13.5 | 9.3 | 6.3 | - | - | - | - |
| Comp.Ex.2 | 100.0 | 66.7 | 49.8 | 36.3 | 28.0 | 22.7 | 20.0 | 19.0 | - | - | - | - |
| Comp.Ex.3 | 100.0 | 60.2 | 44.0 | 32.0 | 26.0 | 21.6 | 19.5 | 18.3 | - | - | - | - |

The release behavior of the pheromone substance from the water dispersion type sex pheromone sustained release preparation can be considered from the results of Examples 1 to 6 and Comparative Examples 1 to 3.

In Examples 1 to 6, the initial release was controlled better and uniformity of the release amount was improved more, thereby extending the effective release period in comparison with those of Comparative Examples 1 to 3.

In Comparative Example 1, the effective release period was short since the initial release was fast. In Comparative Examples 2 and 3, the initial release was also fast and decrease in the release amount was observed in the latter half of release, thereby shortening the effective release period.

<Example 7>

Ion exchanged water (50.0 parts by weight) and $\gamma$-cyclodextrin (5.4 parts by weight, CAVAMAX W8 produced by Wacker Chemie AG) were added to a glass reactor equipped with a thermometer and a homogenizer as a stirrer, and stirring was conducted by using the homogenizer (5,000 rpm) at 25°C. After the dissolution of $\gamma$-cyclodextrin, Z-9-hexadecenal, which is the sex pheromone component of Helicoverpa assulta (1.0 parts by weight), was added. Stirring at 25°C for 3 hour resulted in a dispersion liquid of $\gamma$-cyclodextrin enclosing Z-9-hexadecenal.

To the dispersion liquid, added were a non-inclusion $\gamma$-cyclodextrin which is a solid at 25°C (5.4 parts by weight, CAVAMAX W8 produced by Wacker Chemie AG) and a polyvinyl alcohol (5.0 parts by weight, polymerization degree of 1,700, saponification degree of 96.9 mol%, J POVAL JM-17 produced by JAPAN VAM & POVAL Co., Ltd.) which had been dissolved in ion exchanged water (33.2 parts by weight). Stirring at 25°C for 1 hour by a homogenizer (5,000 rpm) resulted in a water dispersion type sex pheromone sustained release preparation. The composition of the obtained water dispersion type sex pheromone sustained release preparation is shown in Table 3.

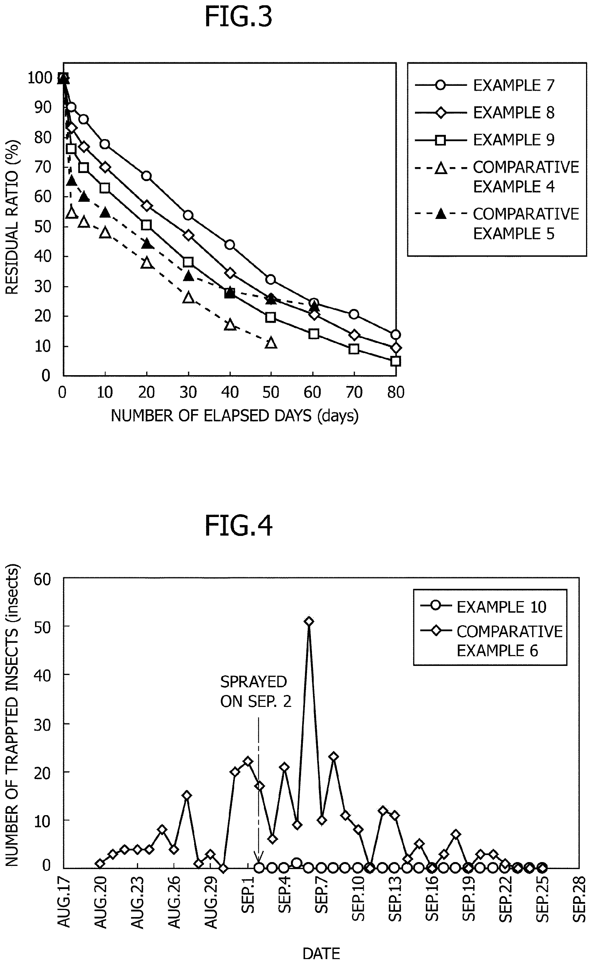

The 200 $\mu$L (20 $\mu$L $\times$ 10 droplets) of the obtained water dispersion type sex pheromone sustained release preparation was applied dropwise to a filter paper (70$\phi$, JIS P3801 No.2, produced by Advantec), and was left in a constant temperature and humidity chamber (temperature of 25°C, humidity of 55%, wind velocity of 0.44 m/s). The residual ratio of the sex pheromone substance, Z-9-hexadecenal, was quantified, corresponding to the number of elapsed days. The results thereof are shown in Table 4 and FIG. 3.

<Confirmation of Inclusion Amount of $\gamma$-cyclodextrin>

A dispersion liquid of $\gamma$-cyclodextrin enclosing Z-9-hexadecenal was prepared from an aqueous solution of $\gamma$-cyclodextrin in the same manner as in the above. The $\gamma$-cyclodextrin enclosing Z-9-hexadecenal which had precipitated as a crystal in this dispersion liquid was filtered, washed twice with ion exchanged water (30.0 g) to remove unenclosed $\gamma$-cyclodextrin, and dried under a reduced pressure, and then an inclusion stoichiometric ratio and a yield were measured by $^1$H-NMR. A crystal (6.34 g) of the $\gamma$-cyclodextrin enclosing Z-9-hexadecenal was obtained at the inclusion stoichiometric ratio of Z-9-hexadecenal and $\gamma$-cyclodextrin of 1.08:1.00 and the yield of 98.4%.

<Example 8>

To a dispersion liquid of $\gamma$-cyclodextrin enclosing Z-9-hexadecenal which was prepared in the same manner as in Example 7, added were a non-inclusion $\gamma$-cyclodextrin which is a solid at 25°C (4.1 parts by weight, CAVAMAX W8 produced by Wacker Chemie AG) and a polyvinyl alcohol (5.0 parts by weight, polymerization degree of 1,700, saponification degree of 96.9 mol%, J POVAL JM-17 produced by JAPAN VAM & POVAL Co., Ltd.) which had been dissolved in ion exchanged water (34.5 parts by weight). Stirred at 25°C for 1 hour by a homogenizer (5,000 rpm) resulted in a water dispersion type sex pheromone sustained release preparation. The composition of the obtained water dispersion type sex pheromone sustained release preparation is shown in Table 3.

For the obtained water dispersion type sex pheromone sustained release preparation, the residual ratio of the sex pheromone substance, Z-9-hexadecenal, was quantified, corresponding to the number of elapsed days in the same manner as in Example 7. The results thereof are shown in Table 4 and FIG. 3.

<Example 9>

To a dispersion liquid of $\gamma$-cyclodextrin enclosing Z-9-hexadecenal which was prepared in the same manner as in Example 7, added were a non-inclusion $\gamma$-cyclodextrin which is a solid at 25°C (2.7 parts by weight, CAVAMAX W8 produced by Wacker Chemie AG) and a polyvinyl alcohol (5.0 parts by weight, polymerization degree of 1,700, saponification degree of 96.9 mol%, J POVAL JM-17 produced by JAPAN VAM & POVAL Co., Ltd.) which had been dissolved in ion exchanged water (35.6 parts by weight). Stirring at 25°C for 1 hour by a homogenizer (5,000 rpm) resulted in a water dispersion type sex pheromone sustained release preparation. The composition of the obtained water dispersion type sex pheromone sustained release preparation is shown in Table 3.

For the obtained water dispersion type sex pheromone sustained release preparation, the residual ratio of the sex pheromone substance, Z-9-hexadecenal, was quantified, corresponding to the number of elapsed days in the same manner as in Example 7. The results thereof are shown in Table 4 and FIG. 3.

<Comparative Example 4>

To a dispersion liquid of γ-cyclodextrin enclosing Z-9-hexadecenal which was prepared in the same manner as in Example 7, added was ion exchanged water (43.6 parts by weight). Stirring at 25°C for 1 hour by a homogenizer (5,000 rpm) resulted in a water dispersion type sex pheromone sustained release preparation. The composition of the obtained water dispersion type sex pheromone sustained release preparation is shown in Table 3.

For the obtained water dispersion type sex pheromone sustained release preparation, the residual ratio of the sex pheromone substance, Z-9-hexadecenal, was quantified, corresponding to the number of elapsed days in the same manner as in Example 7. The results thereof are shown in Table 4 and FIG. 3.

<Comparative Example 5>

To a dispersion liquid of γ-cyclodextrin enclosing Z-9-hexadecenal which was prepared in the same manner as in Example 7, added was a polyvinyl alcohol (5.0 parts by weight, polymerization degree of 1,700, saponification degree of 96.9 mol%, J POVAL JM-17 produced by JAPAN VAM & POVAL Co., Ltd.) which had been dissolved in ion exchanged water (38.6 parts by weight) at 25°C. Stirring at 25°C for 1 hour by a homogenizer (5,000 rpm) resulted in a water dispersion type sex pheromone sustained release preparation. The composition of the obtained water dispersion type sex pheromone sustained release preparation is shown in Table 3.

For the obtained water dispersion type sex pheromone sustained release preparation, the residual ratio of the sex pheromone substance, Z-9-hexadecenal, was quantified, corresponding to the number of elapsed days in the same manner as in Example 7. The results thereof are shown in Table 4 and FIG. 3.

Table 3

| | inclusion-cyclodextrin | | | non-inclusion cyclodextrin | polyvinyl alcohol | water |
| | sex pheromone *1 (weight parts) | cyclodextrin *2 (weight parts) | total (weight parts) | *2 (weight parts) | *3 (weight parts) | (weight parts) |
|---|---|---|---|---|---|---|
| Example7 | 1.0 | 5.4 | 6.4 | 5.4 | 5.0 | 83.2 |
| Example8 | 1.0 | 5.4 | 6.4 | 4.1 | 5.0 | 84.5 |
| Example9 | 1.0 | 5.4 | 6.4 | 2.7 | 5.0 | 85.6 |
| Comp.Ex. 4 | 1.0 | 5.4 | 6.4 | 0.0 | 0.0 | 93.6 |
| Comp.Ex. 5 | 1.0 | 5.4 | 6.4 | 0.0 | 5.0 | 88.6 |

*1 Z-9-hexadecenal was used as a sex pheromone substance.
*2 γ-cyclodextrin was used.
*3 Polyvinyl alcohol (degree of polymerization of 1700, saponification degree of 96.9mol%) was used.

Table 4

| | residual ratio (%) at the number of elapsed days | | | | | | | | | | |
| | 0days | 2days | 5days | 10days | 20days | 30days | 40days | 50days | 60days | 70days | 80days |
|---|---|---|---|---|---|---|---|---|---|---|---|
| Example7 | 100.0 | 90.1 | 86.0 | 77.7 | 67.0 | 53.7 | 43.8 | 32.3 | 24.4 | 20.5 | 13.6 |
| Example8 | 100.0 | 83.3 | 76.8 | 70.0 | 57.1 | 47.1 | 34.4 | 25.8 | 20.5 | 13.6 | 9.4 |
| Example9 | 100.0 | 76.2 | 69.7 | 62.9 | 50.4 | 38.0 | 27.6 | 19.6 | 13.9 | 8.9 | 4.7 |
| Comp.Ex.4 | 100.0 | 54.9 | 51.8 | 48.2 | 38.0 | 26.5 | 17.2 | 11.1 | 5.0 | - | - |

(continued)

|  | residual ratio (%) at the number of elapsed days | | | | | | | | | | |
|---|---|---|---|---|---|---|---|---|---|---|---|
|  | 0days | 2days | 5days | 10days | 20days | 30days | 40days | 50days | 60days | 70days | 80days |
| Comp.Ex.5 | 100.0 | 65.7 | 60.4 | 55.1 | 44.6 | 33.8 | 28.3 | 25.8 | 23.5 | - | - |

The release behavior of the pheromone substance from the water dispersion type sex pheromone sustained release preparation can be considered from the results of Examples 7 to 9 and Comparative Examples 4 and 5.

In Examples 9 to 11, the initial release was controlled better and uniformity of the release amount was improved more, thereby extending the effective release period in comparison with those of Comparative Examples 4 and 5.

In Comparative Example 4, the effective release period was short since the initial release was fast. In Comparative Example 5, the initial release was also fast decrease in the release amount was observed in the latter half of release, thereby shortening the effective release period.

<Mating Disruption Test in Actual Agricultural Field>

<Example 10>

An effect test on mating disruption was conducted in a soybean agricultural field (520 m$^2$, 40 m × 13 m, variety: "ENREI", row width: 75 cm, intrarow spacing: 18 cm) by using the water dispersion type sex pheromone sustained release preparation described in Example 1. The soybean agricultural field was divided equally into two divisions (each of Divisions A and B, 260 m$^2$, 20 m × 13 m). Division A was assigned to a treatment division (Example 10) and subjected to spraying of a water dispersion type sex pheromone sustained release preparation (500.0 g, containing 5.0 g (1.0 wt%) of E,E-8,10-dodecadienyl acetate which is the sex pheromone component of Leguminivora glycinivorella) by using a pressurized spraying machine on September 2. A pheromone trap for attracting adult male insects was also installed in the treatment division, and the number of the trapped adult male insects after the spraying was confirmed and a mating disruption ratio was obtained.

The pheromone traps carry the same sex pheromone as the sex pheromone released by adult female insects. The sex pheromone attracts adult male insects so that the emergence of harmful insects during installation can be figured out. The number of trapped insects becomes lower in an agricultural field in which a sex pheromone sustained release preparation has been installed or sprayed than that in an untreated agricultural field. Accordingly, this method is used for figuring out the effect of mating disruption. As a value showing the effect of mating disruption, the mating disruption ratio below is exemplified.

$$\text{mating disruption ratio } (\%) = 100 - (\text{number of trapped insects in treatment}$$

$$\text{division / number of trapped insects in untreated division}) \times 100$$

The numbers of pheromone-trapped insects and mating disruption ratios in the treated division are shown in Table 5 and FIG. 4.

<Comparative Example 6>

Another division of the soybean agricultural field shown in Example 10, Division B, was assigned to an untreatment division, and the emergence of Leguminivora glycinivorella was monitored from August 20 by installing a pheromone trap without spraying a water dispersion type sex pheromone sustained release preparation. The number of trapped insects was confirmed and a mating disruption ratio was obtained in the same manner as in Example 10. The numbers of pheromone-trapped insects and mating disruption ratios in the un-treatment division are shown in Table 5 and FIG. 4.

Table 5

| | number of pheromone-trapped insects (insects) | | | | | | | | | | | |
|---|---|---|---|---|---|---|---|---|---|---|---|---|
| date | August | | | | | | | | | | | |
| | 20 | 21 | 22 | 23 | 24 | 25 | 26 | 27 | 28 | 29 | 30 | 31 |
| Example10 (treatment division) | — | — | — | — | — | — | — | — | — | — | — | — |
| Comp.Ex.6 (non-treatment division) | 1 | 3 | 4 | 4 | 4 | 8 | 4 | 15 | 1 | 3 | 0 | 20 |
| mating disruption ratio (%) | — | — | — | — | — | — | — | — | — | — | — | — |

| | number of pheromone-trapped insects (insects) | | | | | | | | | | | | |
|---|---|---|---|---|---|---|---|---|---|---|---|---|---|
| date | September | | | | | | | | | | | | |
| | 1 | 2 | 3 | 4 | 5 | 6 | 7 | 8 | 9 | 10 | 11 | 12 | 13 |
| Example10 (treatment division) | — | 0 | 0 | 0 | 1 | 0 | 0 | 0 | 0 | 0 | 0 | 0 | 0 |
| Comp.Ex.6 (non-treatment division) | 22 | 17 | 6 | 21 | 9 | 51 | 10 | 23 | 11 | 8 | 0 | 12 | 11 |
| mating disruption ratio (%) | — | 100 | 100 | 100 | 89 | 100 | 100 | 100 | 100 | 100 | - | 100 | 100 |

| | number of pheromone-trapped insects (insects) | | | | | | | | | | | |
|---|---|---|---|---|---|---|---|---|---|---|---|---|
| date | September | | | | | | | | | | | |
| | 14 | 15 | 16 | 17 | 18 | 19 | 20 | 21 | 22 | 23 | 24 | 25 |
| Example10 (treatment division) | 0 | 0 | 0 | 0 | 0 | 0 | 0 | 0 | 0 | 0 | 0 | 0 |
| Comp.Ex.6 (non-treatment division) | 2 | 5 | 0 | 3 | 7 | 0 | 3 | 3 | 1 | 0 | 0 | 0 |
| mating disruption ratio (%) | 100 | 100 | - | 100 | 100 | - | 100 | 100 | 100 | - | - | - |

In the treatment division (Example 10), after the spraying of the water dispersion type sex pheromone sustained release preparation, the number of pheromone-trapped insects was extremely low, only one adult male insect, throughout the period from September 2 to September 25. On the other hand, 203 adult male insects were trapped within the same period in the un-treatment division (Comparative Example 6). The mating disruption ratio after spraying of the water dispersion type sex pheromone sustained release preparation was 99.5%, and thus an extremely high mating disruption effect was confirmed.

**Claims**

1.   A water dispersion type sex pheromone sustained release spray preparation, comprising at least:

an insect sex pheromone substance which is enclosed in a ring of an inclusion cyclodextrin,
the inclusion cyclodextrin which encloses the insect sex pheromone substance,
a non-inclusion cyclodextrin which does not enclose the insect sex pheromone substance,

a water-soluble polymer, and
water,

wherein
the insect sex pheromone substance is one or more insect sex pheromone substances selected from the group consisting of acetates, esters, aldehydes, alcohols, ketones, epoxides and hydrocarbons, each having 4 to 23 carbon atoms in total inclusive of the carbon number of functional groups;
said inclusion cyclodextrin and said non-inclusion cyclodextrin may be of the same or different types and are selected from the group consisting of $\alpha$-cyclodextrin, $\beta$-cyclodextrin and $\gamma$-cyclodextrin;
said water-soluble polymer is selected from polyvinyl alcohols;
the amount of the inclusion cyclodextrin is 1.0 to 1.1 mol or 2.0 to 2.2 mol per mol of the sex pheromone substance, and said non-inclusion cyclodextrin is comprised in a molar amount of 0.1 to 1.5 times as much as a molar amount of said insect sex pheromone substance.

2. A method for producing the water dispersion type sex pheromone sustained release spray preparation of claim 1, comprising at least the steps of:

preparing an aqueous suspension of an insect sex pheromone substance which is enclosed by a cyclodextrin, and a non-inclusion cyclodextrin which does not enclose the insect sex pheromone substance, and
adding an aqueous solution of water-soluble polymer selected from polyvinyl alcohols to the aqueous suspension.

**Patentansprüche**

1. Eine wasserdispersionsartige Sexualpheromon Sprühzubereitung mit anhaltender Freisetzung, umfassend zumindest:

eine Insekten Sexualpheromon Substanz, die in einem Ring eines einschließenden Cyclodextrins eingeschlossen ist,
das einschließende Cyclodextrin, das die Insekten Sexualpheromon Substanz einschließt,
ein nicht einschließendes Cyclodextrin, das die Insekten Sexualpheromon Substanz nicht einschließt,
ein wasserlösliches Polymer, und
Wasser,

wobei
die Insekten Sexualpheromon Substanz eine oder mehrere Insekten Sexualpheromon Substanzen, ausgewählt aus der Gruppe, bestehend aus Acetaten, Estern, Aldehyden, Alkoholen, Ketonen, Epoxiden und Kohlenwasserstoffen ist, wobei jede insgesamt 4 bis 23 Kohlenstoffatome, einschließlich der Kohlenstoff Anzahl der funktionellen Gruppen, hat;
besagtes einschließendes Cyclodextrin und besagtes nicht einschließendes Cyclodextrin von demselben oder unterschiedlichen Typen sein können und ausgewählt sind aus der Gruppe, bestehend aus $\alpha$-Cydodextrin, $\beta$-Cyclodextrin und $\gamma$-Cyclodextrin;
besagtes wasserlösliches Polymer ausgewählt ist aus Polyvinyl-Alkoholen;
die Menge des einschließenden Cyclodextrins 1,0 bis 1,1 mol oder 2,0 bis 2,2 mol pro mol der Sexualpheromon Substanz ist, und
besagtes nicht einschließendes Cyclodextrin in einer molaren Menge von 0,1 bis 1,5-mal so viel wie eine molare Menge der besagten Sexualpheromon Substanz enthalten ist.

2. Ein Verfahren zum Herstellen der wasserdispersionsartigen Sexualpheromon Sprühzubereitung mit anhaltender Freisetzung von Anspruch 1, umfassend zumindest die Schritte:

Zubereiten einer wässrigen Suspension einer Insekten Sexualpheromon Substanz, die von einem Cyclodextrin eingeschlossen ist, und eines nicht einschließenden Cyclodextrins, das die Insekten Sexualpheromon Substanz nicht einschließt, und
Zugeben einer wässrigen Lösung von wasserlöslichem Polymer, ausgewählt aus Polyvinylalkoholen, zu der wässrigen Suspension.

**Revendications**

1. Préparation pour pulvérisation à libération prolongée de phéromone sexuelle de type à dispersion aqueuse, comprenant au moins :

   une substance de phéromone sexuelle d'insecte qui est renfermée dans un cycle d'une cyclodextrine d'inclusion,
   la cyclodextrine d'inclusion qui renferme la substance de phéromone sexuelle d'insecte,
   une cyclodextrine de non inclusion qui ne renferme pas la substance de phéromone sexuelle d'insecte,
   un polymère soluble dans l'eau, et
   de l'eau,
   dans laquelle
   la substance de phéromone sexuelle d'insecte est une ou plusieurs substances de phéromone sexuelle d'insecte choisies dans le groupe consistant en des acétates, des esters, des aldéhydes, des alcools, des cétones, des époxydes et des hydrocarbures, ayant chacun de 4 à 23 atomes de carbone au total y compris le nombre d'atomes de carbone de groupes fonctionnels ;
   ladite cyclodextrine d'inclusion et ladite cyclodextrine de non inclusion peuvent être du même type ou de types différents et sont choisies dans le groupe consistant en l'$\alpha$-cyclodextrine, la $\beta$-cyclodextrine et la $\gamma$-cyclodextrine ;
   ledit polymère soluble dans l'eau est choisi parmi des polyalcools vinyliques ;
   la quantité de la cyclodextrine d'inclusion est de 1,0 à 1,1 mole ou 2,0 à 2,2 moles par mole de la substance de phéromone sexuelle, et
   ladite cyclodextrine de non inclusion est comprise dans une quantité molaire de 0,1 à 1,5 fois d'une quantité molaire de ladite substance de phéromone sexuelle d'insecte.

2. Procédé de production de la préparation pour pulvérisation à libération prolongée de phéromone sexuelle de type à dispersion aqueuse de la revendication 1, comprenant au moins les étapes de :

   préparation d'une suspension aqueuse d'une substance de phéromone sexuelle d'insecte qui est renfermée par une cyclodextrine, et d'une cyclodextrine de non inclusion qui ne renferme pas la substance de phéromone sexuelle d'insecte, et
   ajout d'une solution aqueuse de polymère soluble dans l'eau choisie parmi des polyalcools vinyliques à la suspension aqueuse.

## FIG.1

## FIG.2

# FIG.3

# FIG.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 60252403 A
- JP 7231743 A
- JP 2001158843 A
- JP 2004331625 A
- JP 2006035210 A
- US 5650160 A
- US 4456587 A

### Non-patent literature cited in the description

- *Crop protection,* 2009, vol. 28, 181-189